# EUROPÄISCHE PATENTSCHRIFT

(11) **EP 2 794 087 B1**
(45) Veröffentlichungstag und Bekanntmachung des Hinweises auf die Patenterteilung: **07.11.2018**
(21) Anmeldenummer: 12813013.5
(22) Anmeldetag: 21.12.2012
(51) Int. Cl.: B01J 19/24, C01B 33/035

(54) **REAKTOR UND VERFAHREN ZUR HERSTELLUNG VON REINSTSILIZIUM**
REACTOR AND PROCESS FOR PRODUCING HIGH-PURITY SILICON
RÉACTEUR ET PROCÉDÉ DE FABRICATION DE SILICIUM ULTRAPUR

(30) Priorität: 22.12.2011 DE 102011089695
(43) Veröffentlichungstag der Anmeldung: 29.10.2014
(73) Patentinhaber: Schmid Silicon Technology GmbH, 72250 Freudenstadt (DE)
(72) Erfinder: KERAT, Uwe, 72270 Baiersbronn (DE)
(74) Vertreter: Patentanwaltskanzlei Cartagena
(86) Internationale Anmeldenummer: PCT/EP2012/076747
(87) Internationale Veröffentlichungsnummer: WO 2013/093051

(56) Entgegenhaltungen:
- EP-A1- 2 423 352
- DE-B3-102009 003 368
- US-A- 4 681 652

## Beschreibung

Die vorliegende Erfindung betrifft einen Reaktor und ein Verfahren zur Herstellung von Silizium mittels thermischer Zersetzung einer siliziumhaltigen Verbindung an hocherhitzten Silizium-Stäben.

Hochreines Silizium wird in der Regel in einem mehrstufigen Prozess ausgehend von metallurgischem Silizium, das in der Regel noch einen relativ hohen Anteil an Verunreinigungen aufweist, hergestellt. Zur Aufreinigung des metallurgischen Siliziums kann dieses beispielsweise in ein Trihalogensilan wie Trichlorsilan (SiHCl₃) überführt werden, das anschließend thermisch zu hochreinem Silizium zersetzt wird. Eine derartige Vorgehensweise ist beispielsweise aus der DE 2919086 A1 bekannt. Alternativ dazu kann man hochreines Silizium auch durch thermische Zersetzung von Monosilan gewinnen, wie es zum Beispiel in der DE 3311650 A1 beschrieben ist.

In den letzten Jahren ist die Gewinnung von Reinstsilizium mittels thermischer Zersetzung von Monosilan immer stärker in den Vordergrund getreten. So ist zum Beispiel in der DE 102009003368 B3 ein Reaktor beschrieben, in den Monosilan eingedüst werden kann, das sich an in dem Reaktor angeordneten hocherhitzten Siliziumstäben zersetzt. Das dabei anfallende Silizium wird auf der Oberfläche der Siliziumstäbe abgeschieden.

Damit sich die Abscheidung besser kontrollieren lässt, ist es üblich, in Reaktoren wie den in der DE 102009003368 B3 beschriebenen kein reines Monosilan einzuspeisen sondern ein Gemisch aus Monosilan und einem Trägergas wie Wasserstoff. Bei der Einspeisung muss allerdings darauf geachtet werden, dass sich dieses Gasgemisch nicht zu stark erhitzt, insbesondere nicht auf eine Temperatur > 400 °C. Ab dieser Temperatur tritt nämlich eine Zersetzung des Monosilans bereits in der Gasphase ein, wobei sich ein Silizium-Staub bildet, der auf den Boden des Reaktors sinkt, sich auf den Siliziumstäben absetzt oder, samt weiteren Zersetzungsprodukten, aus dem Reaktor ausgeschieden wird. In der Praxis ist die Temperatur des Gasgemisches im Reaktor sehr schwer zu kontrollieren, da innerhalb des Reaktors große Temperaturgefälle bestehen. Beispielsweise weisen die hocherhitzten Silizium-Stäbe in der Regel eine Temperatur > 800 °C auf, während andere Reaktorteile durch aktive Kühlung auf deutlich niedrigeren Temperaturen gehalten werden.

Aus der EP 2423352 A1 ist ein Verfahren zur thermischen Zersetzung eines silanhaltigen Gases an hocherhitzen Silizium-Stäben innerhalb eines Reaktors bekannt. Hierbei kommt ein Hitzeschild zum Einsatz, der die Reaktoraußenwände von den in dem Reaktor angeordneten Silizium-Stäben abschirmt. Der Hitzeschild besteht besonders bevorzugt aus Silizium. Während einer thermischen Zersetzung in dem Reaktor scheiden sich nicht unerhebliche Mengen Silizium auch auf dem Schild ab.

Der vorliegenden Erfindung lag die Aufgabe zugrunde, einen Reaktor der eingangs genannten Art bereitzustellen, der energieeffizienter arbeitet als aus dem Stand der Technik bekannte Reaktoren und der eine effiziente Kontrolle der Temperatur eines einzuspeisenden siliziumhaltigen Gases ermöglicht.

Diese Aufgabe wird gelöst durch den Reaktor mit den Merkmalen des Anspruchs 1 sowie durch das Verfahren mit den Merkmalen des Anspruchs 11. Bevorzugte Ausführungsformen des erfindungsgemäßen Reaktors sind in den Ansprüchen 2 bis 10 angegeben. Eine bevorzugte Ausführungsform des erfindungsgemäßen Verfahrens findet sich in Anspruch 12.

Ein erfindungsgemäßer Reaktor umfasst stets einen Reaktorboden sowie, darauf montiert, ein Reaktoroberteil. Das Reaktoroberteil kann z.B. glocken- oder haubenartig ausgebildet sein. Bei dem Reaktorboden handelt es sich meist um eine Bodenplatte, auf die das Reaktoroberteil aufgesetzt werden kann. Gemeinsam schließen die beiden einen Reaktorinnenraum ein, in dem hocherhitzte Silizium-Stäbe angeordnet werden können, um daran siliziumhaltige Verbindungen thermisch zu zersetzen. Zu diesem Zweck weist der Reaktor Halterungen auf, welche bevorzugt auf dem Reaktorboden angeordnet sind oder in den Reaktorboden integriert sind. In diesen Halterungen sind die Silizium-Stäbe fixiert. Üblicherweise sind die Silizium-Stäbe vertikal zum Reaktorboden ausgerichtet und weisen innerhalb des Reaktorinnenraums senkrecht nach oben.

In der Regel ist das Reaktoroberteil über mechanische Befestigungsmittel wie Schrauben am Reaktorboden fixiert. Dadurch ist gewährleistet, dass sich das Reaktoroberteil vom Reaktorboden lösen und abnehmen lässt, so dass man die Silizium-Stäbe nach einem Zersetzungszyklus zwecks "Aberntung" des abgeschiedenen Siliziums entnehmen kann.

Analog zu der in der DE 102009003368 B3 beschriebenen Erfindung ist es auch vorliegend bevorzugt, dass die im Reaktor fixierten Silizium-Stäbe U-förmig ausgebildet sind. Sie weisen in dieser Ausführungsform jeweils zwei freie Enden auf, wobei bevorzugt jedem dieser Enden eine der auf dem Reaktorboden angeordneten Halterungen zugeordnet ist. Beispielsweise für 27 U-förmige Silizium-Stäbe werden also 54 Halterungen benötigt.

In bevorzugten Ausführungsformen zeichnet sich ein erfindungsgemäßer Reaktor dadurch aus, dass die Halterungen auf dem Reaktorboden ein Muster aus Hexagonen, besonders bevorzugt aus regelmäßigen Hexagonen, ausbilden. Die Halterungen bilden dabei bevorzugt die Ecken der Hexagone. Gegebenfalls findet sich auch im Zentrum eines derart definierten Hexagons eine Halterung.

Bei einem regelmäßigen Hexagon handelt es sich bekanntlich um ein Polygon bestehend aus sechs Ecken und sechs Seiten, wobei sämtliche sechs Seiten gleich lang sind und sämtliche Winkel an den sechs Ecken gleich groß sind.

Besonders bevorzugt umfasst das Muster ein zentrales Hexagon sowie, ringförmig darum gruppiert, sechs weitere Hexagone, von denen jedes eine Seite mit dem zentralen Hexagon und eine weitere Seite mit den jeweiligen Ringnachbarn gemeinsam hat. Die Halterungen definieren dabei jeweils die Ecken der Hexagone und bei den ringförmig gruppierten Hexagonen zusätzlich deren Zentren. Zur lückenlosen Bildung eines solchen Musters bzw. eines solchen Musterteils werden 30 Halterungen benötigt.

In einer besonders bevorzugten Ausführungsform ist der Ring aus den sechs Hexagonen von einem weiteren Ring aus 12 Hexagonen umgeben. Die Halterungen können bei diesen 12 Hexagonen ebenfalls die Zentren und die Ecken markieren, wobei es allerdings bevorzugt sein kann, dass zumindest einige der Ecken unbesetzt sind.

So werden beispielsweise 72 Halterungen benötigt, damit bei einem Muster umfassend das erwähnte zentrale Hexagon sowie die darum gruppierten sechs- und 12-gliedrigen Ringe sämtliche Hexagonecken und -zentren (ausgenommen das Zentrum des zentralen Hexagons) lückenlos mit Halterungen besetzt sind. Ist der erfindungsgemäße Reaktor jedoch beispielsweise nur für die Aufnahme von 27 U-förmigen Silizium-Stäben vorgesehen, so werden nur 54 Halterungen benötigt und im äußeren Ring bleiben einige Positionen, bevorzugt außenliegende Ecken unbesetzt.

Die Anordnung der Halterungen in einem Hexagon-Muster bietet einige große Vorteile. In aus dem Stand der Technik bekannten Reaktoren, beispielsweise dem aus der DE 102009003368 B3 bekannten Reaktor, sind die Halterungen in konzentrischen Kreisen angeordnet. Die Hexagon-Anordnung bietet demgegenüber überraschend deutliche energetische Vorteile. Darüber hinaus lässt sich die Bildung des eingangs erwähnten unerwünschten Silizium-Staubs sehr gut steuern. In dem beschriebenen Muster aus Hexagonen weisen einzelne Halterungen zu sämtlichen unmittelbar benachbarten Halterungen die gleiche Entfernung auf. Hieraus resultiert eine sehr gleichmäßige Verteilung der in den Halterungen fixierten Silizium-Stäbe im Reaktorinnenraum. Dadurch bedingt treten im Reaktorinnenraum Temperaturgefälle in vergleichsweise geringem Maß auf. Weiterhin geht in Folge der gleichmäßigen Verteilung der Silizium-Stäbe auch weniger Energie durch Abstrahlung verloren.

Grundsätzlich können um die beschriebenen Ringe aus Hexagonen noch weitere Ringe aus Hexagonen angeordnet werden, beispielsweise ein dritter Ring aus 18 regelmäßigen Hexagonen.

Ein erfindungsgemäßer Reaktor weist eine mantelförmige Trennwand auf, die den Reaktorinnenraum in zwei Teilbereiche unterteilt, nämlich in einen zentralen, bevorzugt zylindrischen Innenbereich, in dem die Silizium-Stäbe angeordnet sind und in einen diesen radial umschließenden, bevorzugt ringspaltförmigen Außenbereich. Letzterer wird in der Regel nach außen durch das Reaktoroberteil begrenzt. Nach oben hin sind diese Teilbereiche offen oder über Durchlässe in der Trennwand miteinander verbunden.

In einem erfindungsgemäßen Reaktor sind bevorzugt eine solche Trennwand und das beschriebene Merkmal der hexgaonalen Halterungsanordnung verwirklicht. Alternativ können die Halterungen beispielsweise angeordnet sein, wie in der DE 102009003368 B3 beschrieben.

Bevorzugt handelt es sich bei der Trennwand um ein vorzugsweise hohlzylindrisches Bauteil. Die Trennwand kann auf den Reaktorboden montiert sein oder alternativ als Teil des Reaktoroberteils mit diesem am Reaktorboden fixiert werden. Im ersteren Fall ist das Bauteil bevorzugt abnehmbar auf dem Reaktorboden fixiert, beispielsweise über mechanische Befestigungsmittel wie Schrauben. Dadurch ist gewährleistet, dass sich die Trennwand (wie das Reaktoroberteil) vom Reaktorboden lösen und abnehmen lässt, erforderlich sein kann, um die Silizium-Stäbe austauschen zu können. Im letzteren Fall kann das Bauteil als Teil des Reaktoroberteils gemeinsam mit diesem in einem Schritt vom Reaktorboden gelöst und abgehoben werden. Dies ist auch insofern besonders vorteilhaft, als das Reaktoroberteil und die Trennwand in der Regel beide gekühlt werden müssen und sich so ein gemeinsamer Kühlkreislauf verwenden lässt.

Die Höhe der Trennwand entspricht bevorzugt der Länge der über die Halterungen am Reaktorboden fixierten Silizium-Stäbe oder überschreitet diese sogar. Es ist entsprechend bevorzugt, dass die Siliziumstäbe nicht nach oben hin aus dem durch die Trennwand definierten zentralen Innenbereich herausragen. Sofern die Trennwand die erwähnten Durchlässe aufweist, was insbesondere der Fall sein kann, wenn die Trennwand ein Teil des Reaktoroberteils ist, so sind diese bevorzugt derart angeordnet, dass sie den Innen- und den Außenbereich bei geschlossenem Reaktor über den oberen Enden der Silizium-Stäbe miteinander verbinden.

Die Trennwand ist doppelwandig ausgebildet. Die Wände der Trennwand bilden dabei einen Zwischenraum aus, durch den ein Kühlkreislauf geführt ist, beispielsweise ein Kühlkreislauf, der auch das Reaktoroberteil durchströmt.

Besonders bevorzugt weist der Reaktor eine Zuleitung auf, über die die siliziumhaltige Verbindung in den Reaktorinnenraum eingespeist werden kann. Die Zuleitung ist bevorzugt derart angeordnet, dass die siliziumhaltige Verbindung in den ringspaltförmigen Außenbereich eingespeist werden kann. Besonders bevorzugt ist die Zuleitung durch den Reaktorboden geführt, umfasst also einen Durchbruch durch diesen.

In einer weiteren bevorzugten Ausführungsform erfolgt die Einspeisung der siliziumhaltigen Verbindung direkt in den zentralen Innenbereich des Reaktorinnenraums, in dem die Silizium-Stäbe angeordnet sind, wobei die Zuleitung auch in diesem Fall bevorzugt durch den Reaktorboden geführt ist. In den Reaktorboden können zu diesem Zweck Düsen samt entsprechenden Zuleitungen eingearbeitet sein. Der Reaktorboden kann auch einen siebartigen Aufsatz umfassen, der den Boden des Reaktorinnenraums bildet und unterhalb dem die Düsen angeordnet sind.

Es ist weiterhin bevorzugt, dass der Reaktor eine Abführleitung aufweist, über die gasförmige Zersetzungsprodukte aus dem Reaktorinnenraum abgeführt werden können. Die Abführleitung ist bevorzugt derart angeordnet, dass die gasförmigen Zersetzungsprodukte aus dem zentralen Innenbereich abgeführt werden können. Die Abführleitung ist dabei besonders bevorzugt durch den Reaktorboden geführt, umfasst also einen Durchbruch durch diesen.

Alternativ kann die Abführleitung auch derart angeordnet sein, dass die gasförmigen Zersetzungsprodukte aus dem ringspaltförmigen Außenbereich abgeführt werden können, wobei es auch in diesem Fall bevorzugt ist, dass die Abführleitung durch den Reaktorboden geführt ist.

Erfindungsgemäße Reaktoren mit der Trennwand ermöglichen eine aus dem Stand der Technik bislang unbekannte Variante der Strömungsführung. So kann ein Gemisch aus einer siliziumhaltigen Verbindung und einem Trägergas wie Wasserstoff durch den Reaktorboden in den ringspaltförmigen Außenbereich eingespeist und über die Trennwand oder die Durchlässe in der Trennwand in den zentralen Innenbereich mit den Silizium-Stäben geleitet werden. Im Innenbereich kann das Gemisch wieder in Richtung der Bodenplatte strömen, wobei es die im Innenbereich angeordneten Silizium-Stäbe von oben nach unten, also entgegen der Schwerkraft, passiert.

Es ist aber sehr wohl auch möglich, das Gemisch aus der siliziumhaltigen Verbindung und dem Trägergas durch den Reaktorboden in den zentralen Innenbereich einzuspeisen und über die Trennwand oder die Durchlässe in der Trennwand in den ringspaltförmigen Außenbereich zu leiten und von dort über die erwähnte Abführleitung abzuführen.

Als siliziumhaltige Verbindung kommt im Übrigen bevorzugt Monosilan zum Einsatz, das sich thermisch zu Silizium und Wasserstoff zersetzt. Als Trägergas können beispielsweise Edelgase oder Wasserstoff zum Einsatz kommen. Alternativ kann der erfindungsgemäße Reaktor aber selbstverständlich auch mit einem Halogensilan wie z.B. Trichlorsilan als siliziumhaltige Verbindung gespeist werden.

Wie oben beschrieben, kann das Reaktoroberteil z.B. glocken- oder haubenartig ausgebildet sein. In der Regel umfasst es stets ein hohlzylindrisch ausgebildetes, den Reaktorinnenraum seitlich begrenzendes Basissegment sowie ein Endsegment, das den Reaktorinnenraum nach oben hin begrenzt. Besonders bevorzugt ist es, wie die Trennwand, zumindest in Teilbereichen doppelwandig ausgebildet, so dass es von dem bereits erwähnten Kühlkreislauf durchströmt werden kann.

Insbesondere in Ausführungsformen des erfindungsgemäßen Reaktors mit der Trennwand ist es bevorzugt, wenn das Endsegment mittig eine Einbuchtung, insbesondere eine Wölbung aufweist, die in den Reaktorinnenraum, bevorzugt in den zentralen Innenbereich, hineinragt. Diese Einbuchtung kann beispielsweise dazu dienen, die Strömungsrichtung von Gasen, die aus dem ringspaltförmigen Außenbereich nach oben austreten, zu ändern, insbesondere die Gase in Richtung des zentralen Innenbereichs umzulenken.

Das erfindungsgemäße Verfahren dient wie der erfindungsgemäße Reaktor der Herstellung von Silizium durch thermische Zersetzung einer siliziumhaltigen Verbindung an hocherhitzten Silizium-Stäben. Es hat unter anderem die bereits erwähnte neuartige Strömungsführung entgegen der Schwerkraft zum Inhalt.

In jedem Fall wird zur Durchführung eines erfindungsgemäßen Verfahrens ein Reaktor mit den Merkmalen des Anspruchs 1 benötigt, der einen Reaktorboden und ein Reaktoroberteil umfasst, die gemeinsam einen Reaktorinnenraum einschließen, in dem die Silizium-Stäbe angeordnet werden können. In diesen Reaktor-innenraum wird im Rahmen eines erfindungsgemäßen Verfahrens ein Gasstrom eingeleitet, der die zu zersetzende siliziumhaltige Verbindung umfasst. Nachdem dieser Gasstrom die Silizium-Stäbe passiert hat, wird er aus dem Reaktorinnenraum abgeführt.

Das erfindungsgemäße Verfahren zeichnet sich insbesondere dadurch aus, dass der Gasstrom von oben auf die Silizium-Stäbe geleitet wird und den Reaktorinnenraum von oben nach unten durchströmt. Wie bereits eingangs erwähnt, sind die Silizium-Stäbe vertikal innerhalb des Reaktors fixiert, so dass der Gasstrom zuerst auf ihr oberes Ende trifft und die Stäbe danach der Länge nach passiert.

Klassisch wird eine zu zersetzende siliziumhaltige Verbindung durch den Reaktorboden in den Reaktorinnenraum eingeleitet und strömt in diesem nach oben. Die Abführung von verbrauchtem Gas erfolgt dann beispielsweise, wie in der DE 102009003368 B3 beschrieben, über ein in den Reaktorinnenraum ragendes Rohr.

Besonders gut lässt sich das Verfahren in dem oben beschriebenen Reaktor durchführen, der, wie oben beschrieben, eine mantelförmige Trennwand aufweist, die den Reaktorinnenraum in einen zentralen Innenbereich, in dem die Silizium-Stäbe angeordnet sind, und einen diesen radial umschließenden, ringspaltförmigen Außenbereich, unterteilt. Der Gasstrom wird bevorzugt in den ringspaltförmigen Außenbereich eingespeist und von dort über die Trennwand in den Innenbereich geführt. Diesen durchströmt er von oben nach unten und wird dann über eine Abführleitung durch den Reaktorboden aus dem Reaktorinnenraum abgeführt.

Wie bereits erwähnt, lässt sich der erfindungsgemäße Reaktor aber auch umgekehrt betreiben. Dazu wird der Gasstrom in den zentralen Innenbereich eingespeist, in den ringspaltförmigen Außenbereich geleitet und von dort aus abgeführt, beispielsweise über eine Abführleitung durch den Reaktorboden.

Weitere Merkmale der Erfindung sowie aus der Erfindung resultierende Vorteile ergeben sich aus der nachfolgenden Beschreibung der Zeichnungen, anhand derer die Erfindung illustriert wird. Es sei an dieser Stelle betont, dass sämtliche in der vorliegenden Anmeldung beschriebenen fakultativen Aspekte des erfindungsgemäßen Verfahrens zum Einen für sich allein, zum Anderen aber auch in Kombination mit einem oder mehreren weiteren Merkmalen bei einer Ausführungsform der Erfindung verwirklicht sein kann. Die nachfolgend beschriebenen bevorzugten Ausführungsformen dienen lediglich zur Erläuterung und zum besseren Verständnis der Erfindung und sind in keiner Weise einschränkend zu verstehen.

### Figurenbeschreibung

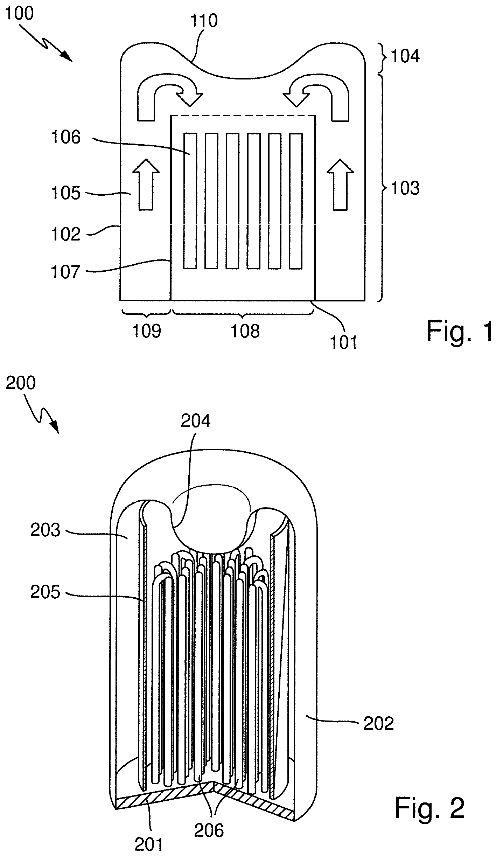

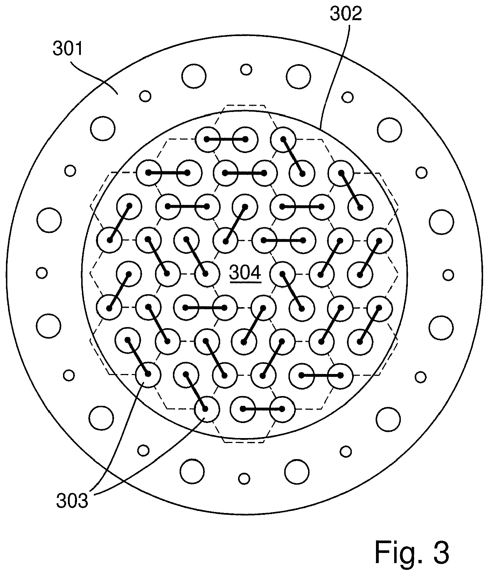

Bei **Fig. 1** handelt es sich um eine schematische Querschnittsdarstellung einer bevorzugten Ausführungsform **100** eines erfindungsgemäßen Reaktors. In dieser umfasst der Reaktor den Reaktorboden **101** sowie, darauf montiert, das Reaktoroberteil **102,** welches sich wiederum in das hohlzylindrisch ausgebildete Basissegment **103** sowie das Endsegment **104** unterteilt. Der Reaktorboden **101** und das Reaktoroberteil **102** schliessen gemeinsam den Reaktorinnenraum **105** ein, in dem die Silizium-Stäbe **106** in vertikaler Ausrichtung zum Reaktorboden **101** angeordnet sind. Der Innenraum **105** wird durch die Trennwand **107** in einen zentralen, zylindrischen Innenbereich **108** und einen ringspaltförmigen Außenbereich **109** unterteilt. Beide Bereiche **108** und **109** sind nach oben hin offen. Die Trennwand überragt zwar die Silizium-Stäbe **106** deutlich, reicht jedoch nicht bis ins Endsegment **104**. Stattdessen ist die Trennwand **107** am Reaktorboden **101** fixiert. Wie das Basissegment **103** ist die Trennwand **107** hohlzylindrisch ausgebildet. Der durch die Trennwand **107** und das Basissegment **103** begrenzte Außenbereich **109** kann als Kanal für ein Gas enthaltend eine siliziumhaltige Verbindung dienen, das aufwärts in Richtung des Endsegments **104** strömt. Dieses weist mittig eine Wölbung **110** auf, die in den Reaktorinnenraum **105** hineinragt. Die Wölbung dient dazu, das aus dem ringspaltförmigen Außenbereich **109** austretende siliziumhaltige Gas in Richtung des Innenbereichs **108** umzulenken. In diesem trifft es auf die Silizium-Stäbe **106**, die es von oben nach unten passiert. Dabei zersetzt sich die in dem Gas enthaltene siliziumhaltige Verbindung. Es scheidet sich metallisches Silizium an den Silizium-Stäben **106** ab. Gasförmige Zersetzungsprodukte können über den Reaktorboden **101** abgeführt werden.
**Fig. 2** zeigt eine teilgeschnittene Darstellung eines erfindungsgemäßen Reaktors **200**. Dieser umfasst den Reaktorboden **201** und das Reaktoroberteil **202**. Wie im Fall des in Fig. 1 dargestellten Reaktors **100** weist auch das Reaktoroberteil **202** ein Endsegment mit einer in den Reaktor-innenraum **203** hineinragenden Wölbung **204** auf. Innerhalb des Reaktorinnenraums **203** ist die Trennwand **205** angeordnet, die wiederum die Silizium-Stäbe **206** mantelartig umschließt. Bei den Silizium-Stäben **206** handelt es sich um U-förmige Silizium-Stäbe, die über entsprechende Halterungen auf dem Reaktorboden **201** fixiert sind.
Bei **Fig. 3** handelt es sich um die schematische Darstellung eines Reaktorbodens **301** von oben (Draufsicht). Dargestellt ist unter anderem die Trennwand **302**, innerhalb der die U-förmigen Silizium-Stäbe **303** angeordnet sind. Die Silizium-Stäbe **303** sind dabei in Halterungen fixiert, die auf dem Reaktorboden **301** ein Muster aus regelmäßigen Hexagonen ausbilden. Zur Veranschaulichung sind die Hexagone eingezeichnet. Wie klar zu erkennen ist, bilden die Halterungen zum einen die Ecken der Hexagone, zum anderen aber auch ihre Zentren. Das dargestellte Muster umfasst das zentrale Hexagon **304** sowie, darum ringförmig gruppiert, sechs weitere Hexagone, von denen jedes eine Seite mit dem zentralen Hexagon **304** und eine weitere Seite mit dem jeweiligen Ringnachbarn gemeinsam hat. Um diesen Ring aus sechs Hexagonen ist ein weiterer Ring aus 12 Hexagonen angeordnet. Da der Reaktorboden **301** jedoch nur zur Aufnahme von 27 U-förmigen Silizium-Stäben vorgesehen ist, sind die Hexagonstrukturen des äußeren Rings nicht vollständig.

## Patentansprüche

1. Reaktor zur Herstellung von Silizium mittels thermischer Zersetzung einer siliziumhaltigen Verbindung an hocherhitzten Silizium-Stäben, umfassend einen Reaktorboden und ein darauf montiertes, abnehmbares Reaktoroberteil, die gemeinsam einen Reaktorinnenraum einschließen, in dem die thermische Zersetzung erfolgt, wobei der Reaktorboden Halterungen aufweist, in welchen die Silizium-Stäbe fixiert sind, **dadurch gekennzeichnet, dass** der Reaktorinnenraum durch eine mantelförmige Trennwand in zwei Teilbereiche, einen zentralen, bevorzugt zylindrischen Innenbereich, in dem die Silizium-Stäbe angeordnet sind, und einen diesen radial umschließenden, bevorzugt ringspaltförmigen Außenbereich, unterteilt ist, wobei die Teilbereiche nach oben hin offen sind oder über Durchlässe in der Trennwand miteinander in Verbindung stehen, wobei die Trennwand doppelwandig ausgebildet ist und die Wände der Trennwand dabei einen Zwischenraum ausbilden, durch den ein Kühlkreislauf geführt ist.

2. Reaktor nach Anspruch 1, **dadurch gekennzeichnet, dass** die Halterungen auf dem Reaktorboden ein Muster aus Hexagonen ausbilden.

3. Reaktor nach Anspruch 1 oder Anspruch 2, **dadurch gekennzeichnet, dass** das Muster ein zentrales Hexagon umfasst sowie, ringförmig darum gruppiert, sechs weitere Hexagone, von denen jedes eine Seite mit dem zentralen Hexagon und eine weitere Seite mit den jeweiligen Ringnachbarn gemeinsam hat, wobei die Halterungen jeweils die Ecken der Hexagone definieren und bei den ringförmig gruppierten Hexagonen zusätzlich deren Zentren.

4. Reaktor nach Anspruch 3, **dadurch gekennzeichnet, dass** der Ring aus den sechs Hexagonen von einem weiteren Ring aus 12 Hexagonen umgeben ist und die Halterungen bei diesen Hexagonen jeweils die Zentren und teilweise die Ecken definieren, wobei bei sechs der Hexagone eine Ecke und bei weiteren sechs zwei Ecken unbesetzt sind.

5. Reaktor nach einem der vorhergehenden Ansprüche, **dadurch gekennzeichnet, dass** die Silizium-Stäbe U-förmig ausgebildet sind und jeweils zwei freie Enden aufweisen, denen jeweils eine der Halterungen zugeordnet ist.

6. Reaktor nach Anspruch 1, **dadurch gekennzeichnet, dass** die Höhe der Trennwand der Länge der über die Halterungen am Reaktorboden fixierten Silizium-Stäbe entspricht oder diese überschreitet.

7. Reaktor nach Anspruch 1 oder Anspruch 6, **dadurch gekennzeichnet, dass** es sich bei der Trennwand um ein hohlzylindrisches Bauteil handelt, das lösbar mit dem Reaktorboden verbunden ist oder ein Teil des Reaktoroberteils ist.

8. Reaktor nach einem der Ansprüche 1 oder 6 bis 7, **dadurch gekennzeichnet, dass** er eine Zuleitung aufweist, über die die siliziumhaltige Verbindung in den Reaktorinnenraum eingespeist werden kann, insbesondere in den ringspaltförmigen Außenbereich, wobei es bevorzugt ist, dass die Zuleitung durch den Reaktorboden geführt ist.

9. Reaktor nach einem der Ansprüche 1 oder 5 bis 8, **dadurch gekennzeichnet, dass** er eine Abführleitung aufweist, über die gasförmige Zersetzungsprodukte aus dem Reaktorinnenraum abgeführt werden können, insbesondere aus dem zentralen Innenbereich, wobei es bevorzugt ist, dass die Abführleitung durch den Reaktorboden geführt ist.

10. Reaktor nach einem der Ansprüche 1 oder 5 bis 9, **dadurch gekennzeichnet, dass** das Reaktoroberteil ein hohlzylindrisch ausgebildetes, den Reaktorinnenraum seitlich begrenzendes Basissegment umfasst sowie ein Endsegment, das den Reaktorinnenraum nach oben hin begrenzt, wobei das Endsegment mittig eine Wölbung aufweist, die in den Reaktorinnenraum, bevorzugt in den zentralen Innenbereich, hineinragt.

11. Verfahren zur Herstellung von Silizium, bei dem eine siliziumhaltige Verbindung in einem Reaktor gemäß Anspruch 1 an hocherhitzten Silizium-Stäben thermisch zersetzt wird, wobei
- ein Gasstrom in den Reaktorinnenraum eingeleitet wird, der die zu zersetzende siliziumhaltige Verbindung umfasst, und
- der Gasstrom aus dem Reaktorinnenraum abgeführt wird, nachdem er die Silizium-Stäbe passiert hat,
**dadurch gekennzeichnet, dass** der Gasstrom von oben auf die Silizium-Stäbe geleitet wird und den Reaktorinnenraum von oben nach unten durchströmt.

12. Verfahren nach Anspruch 11, **dadurch gekennzeichnet, dass** der Gasstrom in den ringspaltförmigen Außenbereich eingespeist wird, von dort über die Trennwand in den Innenbereich vordringt, diesen von oben nach unten durchströmt und über eine Abführleitung durch den Reaktorboden aus dem Reaktorinnenraum abgeführt wird.

## Claims

1. Reactor for producing silicon by means of the thermal decomposition of a silicon-containing compound on silicon rods heated to a high temperature, comprising a reactor base and a removable upper reactor part mounted thereon, which together enclose an inner reactor space in which the thermal decomposition is effected, wherein the reactor base has holders, in which the silicon rods are fixed, **characterized in that** the inner reactor space is subdivided by a casing-like partition wall into two partial regions, a central, preferably cylindrical inner region in which the silicon rods are arranged, and an outer region which radially encloses said inner region and is preferably shaped like an annular gap, wherein the partial regions are open toward the top or are connected to one another via passages in the partition wall, wherein the partition wall has a double-walled form and the walls of the partition wall form an intermediate space here through which a cooling circuit is guided.

2. Reactor according to Claim 1, **characterized in that** the holders form a pattern made up of hexagons on the reactor base.

3. Reactor according to Claim 1 or Claim 2, **characterized in that** the pattern comprises a central hexagon and also six further hexagons which are grouped annularly around the latter and each of which has a side in common with the central hexagon and a further side in common with the respective ring neighbors, wherein the holders in each case define the corners of the hexagons and, in the case of the annularly grouped hexagons, additionally the centers thereof.

4. Reactor according to Claim 3, **characterized in that** the ring made up of the six hexagons is surrounded by a further ring made up of 12 hexagons, and the holders in the case of these hexagons in each case define the centers and in some cases the corners, wherein in the case of six of the hexagons one corner is unoccupied and in the case of a further six of the hexagons two corners are unoccupied.

5. Reactor according to one of the preceding claims, **characterized in that** the silicon rods have a U-shaped form and each have two free ends, to each of which one of the holders is assigned.

6. Reactor according to Claim 1, **characterized in that** the height of the partition wall corresponds to or exceeds the length of the silicon rods fixed via the holders on the reactor base.

7. Reactor according to Claim 1 or Claim 6, **characterized in that** the partition wall is a hollow-cylindrical component which is connected releasably to the reactor base or is part of the upper reactor part.

8. Reactor according to one of Claims 1 or 6 to 7, **characterized in that** it has a feed line, via which the silicon-containing compound can be fed into the inner reactor space, in particular into the outer region shaped like an annular gap, it being preferable that the feed line is guided through the reactor base.

9. Reactor according to one of Claims 1 or 5 to 8, **characterized in that** it has a discharge line, via which gaseous decomposition products can be discharged out of the inner reactor space, in particular out of the central inner region, it being preferable that the discharge line is guided through the reactor base.

10. Reactor according to one of Claims 1 or 5 to 9, **characterized in that** the upper reactor part comprises a hollow-cylindrical base segment which laterally delimits the inner reactor space and also an end segment which upwardly delimits the inner reactor space, wherein the center of the end segment has a curvature, which protrudes into the inner reactor space, preferably into the central inner region.

11. Process for producing silicon, in which process a silicon-containing compound is thermally decomposed in a reactor according to Claim 1 on silicon rods heated to a high temperature, wherein
- a gas stream which comprises the silicon-containing compound to be decomposed is introduced into the inner reactor space, and
- the gas stream is discharged out of the inner reactor space after it has passed the silicon rods,
**characterized in that** the gas stream is conducted from above onto the silicon rods and flows through the inner reactor space from the top downward.

12. Process according to Claim 11, **characterized in that** the gas stream is fed into the outer region shaped like an annular gap, penetrates from there via the partition wall into the inner region, flows through said inner region from the top downward and is discharged out of the inner reactor space via a discharge line through the reactor base.

## Revendications

1. Réacteur destiné à la fabrication de silicium par décomposition thermique d'un composé contenant du silicium sur des bâtons de silicium chauffé à haute température, comprenant un fond de réacteur et une partie supérieure de réacteur amovible montée sur le fond qui confinent ensemble une chambre intérieure de réacteur dans laquelle se produit la décomposition thermique, le fond de réacteur comportant des crochets dans lesquels sont fixés les bâtons de silicium, **caractérisé en ce que** la chambre intérieure de réacteur est divisée par une paroi de séparation en forme de gaine en deux zones partielles, une zone intérieure centrale, de préférence cylindrique, dans laquelle sont agencés les bâtons de silicium, et une zone extérieure l'entourant radialement, de préférence en forme d'espace annulaire, les zones partielles étant ouvertes vers le haut ou étant raccordées l'une à l'autre par des passages dans la paroi de séparation, la paroi de séparation étant constituée d'une double paroi et les parois de la paroi de séparation constituant ainsi un espace intermédiaire à travers lequel est conduit un circuit de refroidissement.

2. Réacteur selon la revendication 1, **caractérisé en ce que** les crochets forment un motif d'hexagones sur le fond de réacteur.

3. Réacteur selon la revendication 1 ou la revendication 2, **caractérisé en ce que** le motif comporte un hexagone central ainsi que six autres hexagones regroupés en anneau autour de lui, dont un côté de chacun est commun avec l'hexagone central et dont un autre côté est commun avec son voisin respectif dans l'anneau, les crochets définissant respectivement les coins des hexagones et en outre les centres des hexagones regroupés en anneau.

4. Réacteur selon la revendication 3, **caractérisé en ce que** l'anneau des six hexagones est entouré d'un autre anneau de 12 hexagones et les crochets définissent respectivement les centres ou partiellement les coins de ces hexagones, un coin de six des hexagones et deux coins de six autres étant vacants.

5. Réacteur selon l'une quelconque des revendications précédentes, **caractérisé en ce que** les bâtons de silicium sont réalisés sous la forme de U et comportent respectivement deux extrémités libres auxquelles est respectivement associé un des crochets.

6. Réacteur selon la revendication 1, **caractérisé en ce que** la hauteur de la paroi de séparation correspond à la longueur des bâtons de silicium fixés au fond de réacteur par les crochets ou dépasse cette longueur.

7. Réacteur selon la revendication 1 ou la revendication 6, **caractérisé en ce que** la paroi de séparation est un élément cylindrique creux qui est raccordé au fond de réacteur de manière à pouvoir être retiré ou qui fait partie de la partie supérieure de réacteur.

8. Réacteur selon l'une quelconque des revendications 1 ou 6 à 7, **caractérisé en ce qu'**il comporte une arrivée par laquelle le composé contenant du silicium peut être introduit dans la chambre intérieure de réacteur, en particulier dans la zone extérieure en forme d'espace annulaire, l'arrivée étant de préférence conduite à travers le fond de réacteur.

9. Réacteur selon l'une quelconque des revendications 1 ou 5 à 8, **caractérisé en ce qu'**il comporte une conduite d'évacuation par laquelle les produits gazeux de décomposition peuvent être évacués de la chambre intérieure de réacteur, en particulier de la zone intérieure centrale, la conduite d'évacuation étant de préférence conduite à travers le fond de réacteur.

10. Réacteur selon l'une quelconque des revendications 1 ou 5 à 9, **caractérisé en ce que** la partie supérieure de réacteur comprend un segment de base réalisé sous la forme d'un cylindre creux limitant latéralement la chambre intérieure de réacteur ainsi qu'un segment d'extrémité qui limite la chambre intérieure de réacteur vers le haut, le segment d'extrémité comportant en son milieu une convexité qui avance dans la chambre intérieure de réacteur, de préférence dans la zone intérieure centrale.

11. Procédé de fabrication de silicium selon lequel un composé contenant du silicium est décomposé thermiquement dans un réacteur selon la revendication 1 sur des bâtons de silicium chauffés à haute température,
- un flux gazeux qui comprend le composé contenant du silicium à décomposer étant introduit dans la chambre intérieure de réacteur, et
- le flux gazeux étant évacué de la chambre intérieure de réacteur après avoir passé les bâtons de silicium,
**caractérisé en ce que** le flux gazeux est conduit depuis le haut sur les bâtons de silicium et traverse la chambre intérieure de réacteur de haut en bas.

12. Procédé selon la revendication 11, **caractérisé en ce que** le flux gazeux est introduit dans la zone extérieure en forme d'espace annulaire, progresse de là par-dessus la paroi de séparation dans la zone intérieure, traverse cette dernière de haut en bas et est évacué de la chambre intérieure de réacteur par une conduite d'évacuation à travers le fond de réacteur.
